# EUROPÄISCHE PATENTSCHRIFT

(11) **EP 1 044 336 B1**
(45) Veröffentlichungstag und Bekanntmachung des Hinweises auf die Patenterteilung: **21.07.2004**
(21) Anmeldenummer: 99955663.2
(22) Anmeldetag: 04.09.1999
(51) Int. Cl.: F16C 33/10, H02K 5/167

(54) **SINTERGLEITLAGER FÜR MOTOREN UND GETRIEBE**
SINTERED PLAIN BEARING FOR ENGINES AND GEARS
PALIER LISSE FRITTE POUR MOTEURS ET ENGRENAGES

(30) Priorität: 11.09.1998 DE 19841655; 09.08.1999 DE 19937567
(43) Veröffentlichungstag der Anmeldung: 18.10.2000
(73) Patentinhaber: ROBERT BOSCH GMBH, 70442 Stuttgart (DE); KARL SIMON GmbH & Co. KG, 78733 Aichhalden (DE)
(72) Erfinder: DORNHÖFER, Gerd, D-71229 Leonberg (DE); KOCH, Hans-Peter, D-70435 Stuttgart (DE); VOGT, Andreas, D-71272 Renningen (DE); BROGHAMMER, Thomas, D-78733 Aichhalden (DE); KURZ, Guido, D-78664 Eschbronn-Locherhof (DE); STEHR, Werner, D-72160 Horb-Ahldorf (DE)
(74) Vertreter: Schöpf, Edwin
(86) Internationale Anmeldenummer: PCT/DE1999/002809
(87) Internationale Veröffentlichungsnummer: WO 2000/015970

(56) Entgegenhaltungen:
- EP-A- 0 769 628
- GB-A- 2 064 676
- US-A- 5 704 718
- PATENT ABSTRACTS OF JAPAN vol. 1998, no. 8, 30. Juni 1998 (1998-06-30) & JP 10 068418 A (SAMSUNG), 10. März 1998 (1998-03-10)

## Beschreibung

### Stand der Technik

Die Erfindung betrifft ein Sintergleitlager für Motoren und Getriebe mit einer von einer Lagerbohrung gebildeten und mit Schmierstoff aus Schmierstoffdepots im Lager beaufschlagbaren Lauffläche, bei dem die Lagerbohrung über den Umfang verteilt abwechselnd hoch verdichtete, kleinporige Laufflächen und axial verlaufende niedrig verdichtete, offenporige Schmierstoffdepots aufweist.

Ein derartiges Sintergleitlager ist aus der DE-Z Tribologie + Schmierun gstechnik, 45. Jahrgang, 1/1998, Seiten 47/48 bekannt. Die Schmierstoffdepots werden als im Querschnitt dreieckförmige Nuten in die Lagerbohrung des Sinterkörpers ein-gebracht, während die Laufflächen zwischen den Nuten durch Kalibrieren verdichtet werden. Diese Schmierstoffdepots können wohl Schmierstoff aufnehmen, der beim Betrieb aus dem Sinterlager, d.h. den nicht hoch verdichteten Bereichen desselben, verdrängt wird, sie können aber insbesondere in den Anlaufphasen des Betriebes nichts Wesentliches zum Schmieren der Laufflächen der Lagerbohrung und der darüber gleitenden Welle beitragen.

Dies gilt sinngemäß auch für ein Sintergleitlager nach der US 5,704,718, bei dem die Schmierstoffdepots große U-förmige Nuten bilden, deren Nutgrund gegenüber den Laufflächen mit größerem Durchmesser abgesetzt sind. Der im Bereich dieser Nuten im Stillstand gespeicherte Schmierstoff kann in den Anfangsphasen des Betriebes nicht wirksam zur Schmierung beitragen. Die Schmierstoffdepots müssen sich vorher mit Schmierstoff füllen, um eine wirkungsvolle Schmierung der Welle in der Lagerbohrung zu erreichen.

Es ist Aufgabe der Erfindung, bei einem Sintergleitlager der eingangs erwähnten Art insbesondere in den Anfangsphasen des Betriebes die Schmierung zu verbessern, ohne die im Betrieb durch den in den Schmieröldepots gelangten Schmierstoff vorgenommene Schmierung zu beeinträchtigen.

Diese Aufgabe wird nach der Erfindung dadurch gelöst, dass die Schmierstoffdepots durch Rillenstrukturen mit mindestens zwei Längsrillen gebildet sind und dass zumindest in einem Teil der Rillenstrukturen ein Teil der zwischen benachbarten Längsrillen verbleibenden Rillenkuppen mit der von der Lagerbohrung aufgenommenen Welle zur Schmierstoffübergabe in Kontakt stehen.

Ist nach dem Betrieb der Schmierstoff von dem niedrig verdichteten Bereich der Rillenstrukturen wieder aufgenommen, d.h. die Längsrillen der Rillenstrukturen schmierstofffrei, dann stehen zumindest einige Rillenkuppen nach wie vor mit der Welle für eine Schmierstoffübertragung in Kontakt, so dass schon in der Anfangsphase eines nachfolgenden Betriebes eine Schmierung der Welle stattfindet, die in die Betriebsschmierung aus den Längsrillen übergeht.

Die beim Pressen des Grünlings eingebrachten Rillenstrukturen werden beim Kalibrieren nicht weiter verdichtet und bleiben daher offenporig, so dass ihre Speichervermögen unabhängig von der Festigkeit der Laufflächen bleiben.

Für die Schmierstoffzirkulation ist die Auslegung der Rillenstrukturen vorzugsweise so, dass die Breite der als Kapillarrillen ausgebildeten Längsrillen mindestens 20-mal kleiner ist als die Steighöhe des verwendeten Schmierstoffes in einer Glaskapillare mit einem Durchmesser von 1 mm.

Der Nutgrund der Längsrillen und die Rillenkuppen sind abgerundet und weisen einen Radius auf, der mindestens 2-mal kleiner ist als die Breite der Längsrillen.

Da die Rillenkuppen zwischen benachbarten Längsrillen nur zur Schmierstoffübertragung auf die Welle mit dieser in Kontakt stehen, sind sie nichttragend beteiligt. Ihre geringere Belastbarkeit aufgrund der Offenporigkeit und der niedrigeren Dichte hat dann keine negativen Auswirkungen auf die Lebensdauer des Sintergleitlagers.

Die Längsrillen verbreitern sich konisch mit einem Öffnungswinkel kleiner als 12° zur Welle hin.

Das Speichervermögen an Schmierstoff läßt sich nach einer Weiterbildung dadurch noch vergrößern, dass in die Stirnseiten und/oder die Außenfläche zusätzliche, rillen- oder sacklochartige offenporige Schmierstoffdepots eingebracht sind, die im Öffnungswinkel, der Breite und im Radius des Rillengrundes an die entsprechenden Abmessungen der Längsrillen angepaßt sind.

Die offenporigen Schmierstoffdepots der Stirnseiten können dabei als konzentrische Rillenringe und/oder Rillenringabschnitte ausgebildet sein, die über Radialrillen zu der Lauffläche des Sintergleitlagers geführt sind. Die Rillenringabschnitte sind dabei länger als 0,2 mm.

Über die Stirnseiten können auch gleichmäßig verteilt Radialrillen eingebracht sein, die sich von der Außenfläche zu der Lauffläche des Sintergleitlagers erstrecken.

Für die offenporigen Schmierstoffdepots in der Außenfläche ist nach einer Ausgestaltung vorgesehen, dass in die Außenfläche Umfangsrillen und/oder Umfangsrillenabschnitte und/oder Sacklöcher als Schmierstoffdepots eingebracht sind. Dabei können die Umfangsrillen und/oder Umfangsrillenabschnitte mittels quer verlaufender Verbindungsrillen miteinander verbunden sein. Für die Auslegung aller Schmierstoffdepots wird zudem vorgesehen, dass die Tiefe der Längsrillen, der Radialrillen, der Rillenringe und/oder Rillenringabschnitte und der Umfangsrillen und/oder Umfangsrillenabschnitte kleiner ist als die halbe Steighöhe des Schmierstoffes in einer Glaskapillare mit einem Durchmesser von 1 mm.

Die Erfindung wird anhand von in den Zeichnungen dargestellten Ausführungsbeispielen näher erläutert. Es zeigen:
- Fig. 1: in perspektivischer Ansicht ein Sintergleitlager mit über den Umfang der Lagerbohrung verteilten Rillenstrukturen als Schmierstoffdepots sowie weiteren Schmieröldepots in den anderen Flächen des Sintergleitlagers vor der Kalibrierung der Laufflächen und
- Fig. 2: im Querschnitt die Lagerbohrung eines anders gestalteten Sintergleitlagers vor und nach der Kalibrierung der Laufflächen.

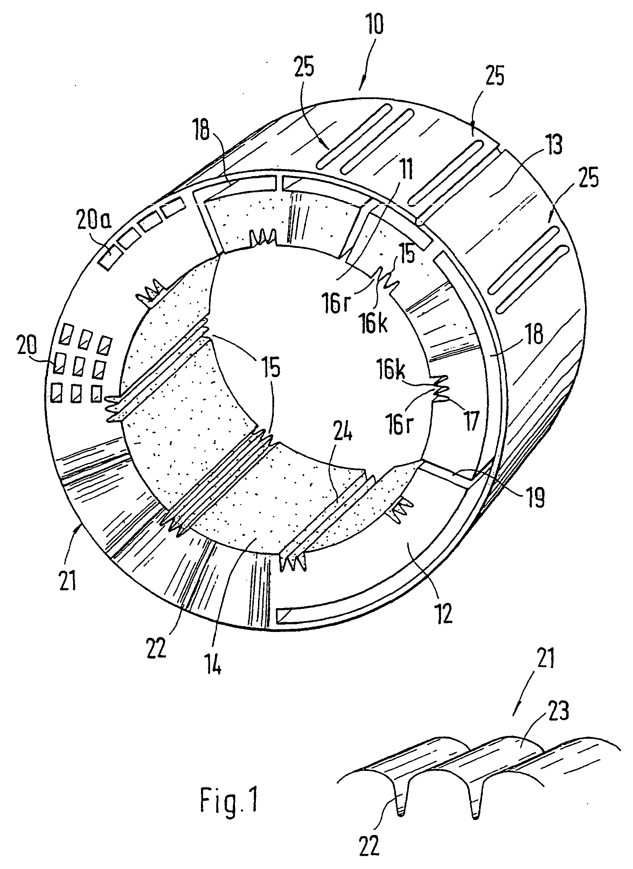

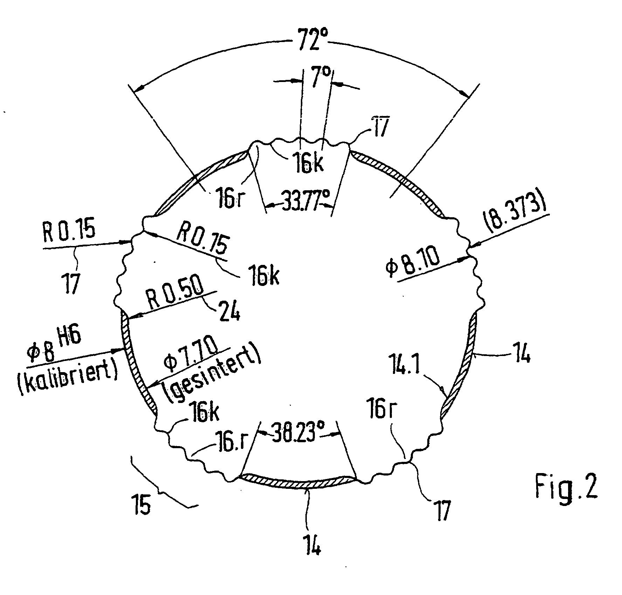

Wie aus der Fig. 1 zu ersehen ist, wird in einem Sintergleitlager 10 beim Pressen des Grünlings in die Lagerbohrung 11 eine Reihe über den Umfang verteilten Rillenstrukturen 15 eingebracht. Diese Rillenstrukturen 15 weisen mindestens zwei Längsrillen 16r auf, die von einer Rillenkuppe 16k getrennt sind und vorzugsweise parallel zueinander verlaufen. Diese offenporigen Rillenstrukturen 15 sind mit ihren Rillenkuppen 16k gegenüber den Laufflächen 14 zum Außenumfang des Sintergleitlagers 10 hin versetzt. Der Rillengrund 17 der Längsrillen 16r und des Radius der Rillenkuppen 16k ist kleiner als die halbe Breite der Längsrillen 16r, wie aus der Fig. 2 zu entnehmen ist. Die Breite der Längsrillen 16r ist mindestens 20-mal kleiner als die Steighöhe des verwendeten Schmierstoffes in einer Glaskapillare mit einem Durchmesser von 1 mm.

Die Festigkeit des Sintergleitlagers kann durch die Zugabe von kurzfasrigen C-Fasern, Keramikpartikeln oder anderen Partikeln verbessert werden.

Wie die Fig. 1 erkennen läßt, können zusätzliche offenporige Schmierstoffdepots auch in die Stirnseiten 12 und/oder in die Umfangsfläche 13 des Sintergleitlagers 10 eingebracht werden. Für die Breite und den Radius des Rillengrundes derartiger rillenartiger Schmierstoffdepots gilt sinngemäß die entsprechende Abmessung wie bei den Längsrillen 16r der Rillenstrukturen 15. Dasselbe gilt auch für den Öffnungswinkel der Längsrillen 16r, der kleiner als 12° gewählt wird.

Die Stirnseiten 12 können z.B. mit Radialrillen 22 und Rillenkuppen 23 versehene Bereiche 21 aufweisen, wie die Teilansicht zur Fig. 1 zeigt. Es können aber auch konzentrische Rillenringe oder Rillenringabschnitte 18 als Schmierstoffdepots eingebracht sein, die über Radialrillen 19 zu der Lauffläche 14 führen.

Wie mit 20 und 20a gezeigt ist, lassen sich auch eine oder mehrere konzentrische Ringe von kurzen rillen- oder sacklochartigen Schmierstoffdepots in die Stirnseiten 12 einbringen, die mindestens 0,2 mm lang sind.

Auf der Außenfläche 13 des Sintergleitlagers 10 können Längs- und Umfangsrillen und/oder Längs- und Umfangsrillenabschnitte 25 als zusätzliche offenporige Schmierstoffdepots eingebracht werden, die über querverlaufende Verbindungsrillen miteinander und mit den Stirnseiten 12 verbunden sein können.

Die Tiefe aller Rillen sollte kieiner ais die haibe Steighöhe des verwendeten Schmierstoffs in einer Glaskapillare mit einem Durchmesser von 1 mm sein.

Die Schmierstoffdepots in den Stirnseiten 12 vergrößern das externe Schmierstoffspeichervolumen des Lagers und versorgen die axiale Anlauffläche mit zusätzlichen Schmierstoffmengen. Die konvex gewölbten Teilflächen der Stirnabschnitte tragen durch ihre Keilspaltwirkung zum verbesserten dynamischen Betriebszustand des Lagers bei. Die axialen Versorgungsrillen haben zusätzliche Verschleißdepotfunktion und ermöglichen den Schmierstofftransport von den Laufflächen 14 auf die Außenfläche 13.

Auf der Außenfläche 13 angeordnete offenporige Schmierstoffdepots nehmen austretenden Schmierstoff auf und verhindern das Abfließen durch die Schwerkraft, das Abschleudern oder das Kriechen.

Alle zusätzlichen Schmierstoffdepots werden nach dem Füllen des Lagers mit Schmierstoff durch Abschleudern oder Zentrifugieren wieder entleert. Dadurch ist die zusätzliche Depotwirkung erreichbar. Das neue Sintergleitlager 10 verliert im Betrieb bis 80 % weniger Schmierstoff. Die Lebensdauer des Sintergleitlagers wird wesentlich erhöht und das Fressen des Lagers durch Übertragsschichtbildung ist erheblich erschwert.

Weiterhin werden Kältegeräusche dadurch verringert, dass bei Volumenkontraktion während der Abkühlung mehr Schmierstoff der Reibstelle zur Verfügung steht.

Die Einbringung der zusätzlichen Schmierstoffdepots dieser Art wird beim Pressen erreicht, so dass keine höheren Herstellkosten anfallen.

Die hoch verdichteten und kleinporigen Laufflächen 14 haben hohe Tragfähigkeit, so dass durch die nahezu massive Struktur derselben ein quasi hydrodynamischer Gleitzustand der Welle erreicht wird. Durch die hohe Porosität im Bereich der Rillenstrukturen 15 wird ein zusätzliches Volumen an Schmierstoff bereit gestellt.

Die Anzahl und die Breite der Längsrillen 16r und der Laufflächen 14 kann in Abhängigkeit vom Anwendungsfall (z.B. mechanische und thermische Belastung) unterschiedlich gewählt werden. Außerdem kann durch die Verdichtung, d.h. Porosität, die Belastungsgröße und das Schmierstoffaufnahmevolumen beeinflußt werden.

Die Rillenstrukturen 15 müssen in Abhängigkeit zur Gestaltung der Laufflächen 14 und des Anwendungsprofils betrachtet werden. Grundsätzlich sind die als Längsrillen 16r der Rillenstrukturen 15 ausgebildeten Schmierstoffdepots in gleicher Anzahl wie die Laufflächen 14 vorhanden. Die Anzahl der Längsrillen 16r der Rillenstrukturen 15 kann gerade oder ungerade sein und muss mindestens 3 betragen. Die Radien der Längsrillen 16r müssen mindestens 0,05 mm sein und dürfen maximal 0,30 mm betragen. Die Tiefe der Längsrillen 16r ist abhängig von der Viskosität des verwendeten Schmierstoffes und kann bis zu 0.5 mm betragen.

Bei der Auslegung der Lagerbohrung 11 eines Sintergleitlagers 10 nach Fig. 2 werden fünf Abschnitte zu je 72° vorgesehen, wobei jeder Abschnitt eine Rillenstruktur 15 mit fünf Längsrillen 16r und vier Rillenkuppen 16k aufweist. Die am Rande der Rollenstrukturen 15 liegenden Längsrillen 16r gehen über Übergänge 24 in die Laufflächen 14 über. Diese Übergänge 24 können vor der Kalibrierung der Laufflächen 14 noch scharfkantig sein, wie der Fig. 1 zu entnehmen ist. Nach der Kalibrierung sind sie jedoch abgerundet und weisen einen Radius von etwa 0,5 mm auf, wie Fig. 2 zeigt. Der Rillengrund 17 und die Rillenkuppen 16k sind ebenfalls abgerundet und haben einen Radius von 0,15 mm. Die Längsrillen 16r erstrecken sich über etwa 7° des Umfanges der Lagerbohrung 11. Die Tiefe der Längsrillen 16r ergibt sich aus der Differenz der Durchmesser 8,373 - 8,10 zu 0,273 mm. Vor der Kalibrierung liegen die nicht kalibrierten Laufflächen 14.1 auf einem Durchmesser von 7,70 mm, während nach der Kalibrierung eine Lagerbohrung 11 durch die Laufflächen 14 mit 8 mm Durchmesser und der Toleranz H8 festgelegt ist. Da die Rillenkuppen 16k nicht kalibriert werden und ihren Durchmesser von 8,10 mm beibehalten, stehen zumindest einige der Rillenkuppen 16k infolge des Lagerspiels mit der eingeführten Welle in nichttragendem Kontakt, der zur Schmierstoffübertragung ausreicht.

Die schraffierten Bereiche 14v der Laufflächen werden beim Kalibrieren verdrängt und zur Erhöhung der Dichte verwendet. Die Rillenstrukturen 15 erstrecken sich vor dem Kalibrieren über 33.77° und nach dem Kalibrieren über 38.23° des Umfanges der Lagerbohrung, wobei die Übergänge 24 mit 0,5 mm abgerundet werden.

Die Rillenkuppen 16k der Rillenstrukturen 15 liegen praktisch mit den kalibrierten Laufflächen 14 auf einer gemeinsamen Mantelfläche, wobei die Anlage der Rillenkuppe 16k an der Welle nur linienförmig oder streifenförmig sein kann.

## Patentansprüche

1. Sintergleitlager (10) für Motoren und Getriebe mit einer von einer Lagerbohrung (11) gebildeten und mit Schmierstoff aus Schmierstoffdepots im Lager beaufschlagbaren Lauffläche (14), bei dem die Lagerbohrung (11) über den Umfang verteilt abwechselnd hoch verdichtete, kleinporige Laufflächen und axial verlaufende niedrig verdichtete, offenporige Schmierstoffdepots aufweist,
**dadurch gekennzeichnet,**
**dass** die Schmieröldepots durch Rillenstrukturen (15) mit mindestens zwei Längsrillen (16) gebildet sind und
**dass** zumindest in einem Teil der Rillenstrukturen (15) ein Teil der zwischen benachbarten Längsrillen (16) verbleibenden Rillenkuppen (16k) mit der von der Lagerbohrung (11) aufgenommenen Welle zur Sch mierstoffübergabe in Kontakt stehen.

2. Sintergleitlager nach Anspruch 1,
**dadurch gekennzeichnet,**
**dass** das Aufnahmevolumen der Längsrillen (16r) der Rillenstrukturen (15) an das Volumen des beim Betrieb des Lagers aus dem Sintermetall verdrängten Schmierstoffes angepaßt ist.

3. Sintergleitlager nach Anspruch 1 oder 2,
**dadurch gekennzeichnet,**
**dass** die Längsrillen (16r) der Rillenstrukturen (15) als Kapillarrillen ausgebildet sind, wobei die Breite der Längsrillen (16r) mindestens 20-mal kleiner ist als die Steighöhe des Schmierstoffes in einer Glaskapillare mit einem Durchmesser von 1 mm.

4. Sintergleitlager nach einem der Ansprüche 1 bis 3,
**dadurch gekennzeichnet,**
**dass** die Längsrillen (16r) am Rillengrund (17) und die Rillenkuppen (16k) mit einem Radius, z.B. 0,05 bis 0,30 mm, abgerundet sind, der mindestens 2-mal kleiner ist als die Breite (z.B. 0,30 bis 0,80 mm) der Längsrillen (16r).

5. Sintergleitlager nach einem der Ansprüche 1 bis 4,
**dadurch gekennzeichnet,**
**dass** die Rillenkuppen (16k) nichttragend mit der Welle in Kontakt stehen.

6. Sintergleitlager nach einem der Ansprüche 1 bis 5,
**dadurch gekennzeichnet,**
**dass** sich die Längsrillen (16r) mit einem Öffnungswinkel kleiner als 12° zur Welle hin konisch verbreitern.

7. Sintergleitlager nach einem der Ansprüche 1 bis 6,
**dadurch gekennzeichnet,**
**dass** es durch Zusatz von kurzfasrigen C-Fasern und/oder Keramikpartikeln und/oder anderen Partikeln in der Festigkeit verbessert ist.

8. Sintergleitlager nach einem der Ansprüche 1 bis 7,
**dadurch gekennzeichnet,**
**dass** in die Stirnseiten (12) und/oder die Außenfläche (13) zusätzliche, rillen- oder sacklochartige offenporige Schmierstoffdepots eingebracht sind, die im Öffnungswinkel, der Breite und im Radius des Rillengrund es (17) an die entsprechenden Abmessungen der Längsrillen (16r) angepaßt sind.

9. Sintergleitlager nach Anspruch 8,
**dadurch gekennzeichnet,**
**dass** die Schmierstoffdepots in den Stirnseiten (12) als Radialrillen (22) ausgebildet sind.

10. Sintergleitlager nach Anspruch 8,
**dadurch gekennzeichnet,**
**dass** in die Stirnseiten (12) konzentrische Rillenringe und/oder Rillenringabschnitte (18) als Schmierstoffdepots eingebracht sind, die über Radialrillen (19) zu den Laufflächen (14) geführt sind.

11. Sintergleitlager nach Anspruch 10,
**dadurch gekennzeichnet,**
**dass** die Rillenringabschnitte (18) länger als 0,2 mm ausgebildet sind.

12. Sintergleitlager nach einem der Ansprüche 1 bis 11,
**dadurch gekennzeichnet,**
**dass** in die Außenfläche (13) Längs- und/oder Umfangsrillen und/oder Längs- und/oder Umfangsrillenabschnitte (25) als Schmierstoffdepots eingebracht sind.

13. Sintergleitlager nach Anspruch 12,
**dadurch gekennzeichnet,**
**dass** die Längs-und Umfangsrillen und/oder Längs- und Umfangsrillenabschnitte (25) mittels querverlaufender Verbindungsrillen miteinander verbunden sind.

14. Sintergleitlager nach einem der Ansprüche 1 bis 13,
**dadurch gekennzeichnet,**
**dass** die Tiefe (z.B. 0,5 mm) der Längsrillen (16r), der Sacklöcher (20a), der Radialrillen (22), der Rillenringe und/oder Rillenringabschnitte (18) und der Umfangsrillen und/oder Umfangsrillenabschnitte (25) kleiner ist als die halbe Steighöhe des Schmierstoffs in einer Glaskapillare mit einem Durchmesser von 1 mm.

15. Sintergleitlager nach einem der Ansprüche 1 bis 14,
**dadurch gekennzeichnet,**
**dass** die Übergänge (24) von den Längsrillen (16r) zu den angrenzenden kalibrierten Laufflächen (14) abgerundet sind, z.B. 0,5 mm.

## Claims

1. Sintered plain bearing (10) for engines and transmissions, with a running surface (14) formed by a bearing bore (11) and being acted upon by lubricant from lubricant repositories in the bearing, in which bearing the bearing bore (11) has alternately, distributed over the circumference, high-compressed small-pore running surfaces and low-compressed open-pore lubricant repositories running axially, **characterized in that** the lubricating-oil repositories are formed by grooved structures (15) having at least two longitudinal grooves (16), and **in that**, at least in some of the grooved structures (15), some of the groove caps (16k) remaining between adjacent longitudinal grooves (16) are in contact with the shaft received by the bearing bore (11), for the transfer of lubricant.

2. Sintered plain bearing according to Claim 1, **characterized in that** the reception volume of the longitudinal grooves (16r) of the grooved structures (15) is adapted to the volume of the lubricant displaced out of the sintered metal during the operation of the bearing.

3. Sintered plain bearing according to Claim 1 or 2, **characterized in that** the longitudinal grooves (16r) of the grooved structures (15) are designed as capillary grooves, the width of the longitudinal grooves (16r) being at least 20 times smaller than the lifting height of the lubricant in a glass capillary having a diameter of 1 mm.

4. Sintered plain bearing according to one of Claims 1 to 3, **characterized in that** the longitudinal grooves (16r) at the groove bottom (17) and the groove caps (16k) are rounded with a radius, for example 0.05 to 0.3 mm, which is at least twice as small as the width (for example, 0.30 to 0.80 mm) of the longitudinal grooves (16r).

5. Sintered plain bearing according to one of Claims 1 to 4, **characterized in that** the groove caps (16r) are in non-load-bearing contact with the shaft.

6. Sintered plain bearing according to one of Claims 1 to 5, **characterized in that** the longitudinal grooves (16r) widen conically towards the shaft with an opening angle smaller than 12°.

7. Sintered plain bearing according to one of Claims 1 to 6, **characterized in that** it is improved in strength by the addition of short-fibre carbon fibres and/or ceramic particles and/or other particles.

8. Sintered plain bearing according to one of Claims 1 to 7, **characterized in that** there are introduced into the end faces (12) and/or the outer face (13) additional groove-like or blindhole-like open-pore lubricant repositories which are adapted in opening angle, in width and in the radius of the groove bottom (17) to the corresponding dimensions of the longitudinal grooves (16r).

9. Sintered plain bearing according to Claim 8, **characterized in that** the lubricant repositories in the end faces (12) are designed as radial grooves (22).

10. Sintered plain bearing according to Claim 8, **characterized in that** there are introduced as lubricant repositories into the end faces (12) concentric grooved rings and/or grooved-ring segments (18) which are led to the running surfaces (14) via radial grooves (19).

11. Sintered plain bearing according to Claim 10, **characterized in that** the grooved-ring segments (18) are designed to be longer than 0.2 mm.

12. Sintered plain bearing according to one of Claims 1 to 11, **characterized in that** there are introduced as lubricant repositories into the outer face (13) longitudinal and/or circumferential grooves and/or longitudinal and/or circumferential groove segments (25).

13. Sintered plain bearing according to Claim 12, **characterized in that** the longitudinal and circumferential grooves und/or longitudinal and circumferential groove segments (25) are connected to one another by means of connecting grooves running transversely.

14. Sintered plain bearing according to one of Claims 1 to 13, **characterized in that** the depth (for example 0.5 mm) of the longitudinal grooves (16r), of the blindholes (20a), of the radial grooves (22), of the grooved rings and/or groove-ring segments (18) and of the circumferential grooves and/or the circumferential groove segments (25) is smaller than half the lifting height of the lubricant in a glass capillary having a diameter of 1 mm.

15. Sintered plain bearing according to one of Claims 1 to 14, **characterized in that** the transitions (24) from the longitudinal grooves (16r) to the adjoining calibrated running surfaces (14) are rounded, for example 0.5 mm.

## Revendications

1. Palier lisse fritté (10) pour moteurs et mécanismes comprenant une surface de roulement (14), formée par un alésage de palier (11) et pouvant être alimentée en lubrifiant issu de dépôts de lubrifiant contenus dans le palier, dans lequel l'alésage de palier (11) présente, distribuées en alternance sur la circonférence, des surfaces de roulement fortement comprimées, à pores fins, et des dépôts de lubrifiant s'étendant axialement, peu comprimés, à pores ouverts,
**caractérisé en ce que**
les dépôts d'huile lubrifiante sont formés par des structures de sillons (15) comprenant au moins deux sillons longitudinaux (16), et au moins dans une partie des structures de sillons (15), une partie des crêtes de sillons (16k) qui subsistent entre des sillons longitudinaux adjacents (16) sont en contact avec l'arbre contenu dans l'alésage de palier (11) pour le transfert du lubrifiant.

2. Palier lisse fritté selon la revendication 1,
**caractérisé en ce que**
le volume de contenance des sillons longitudinaux (16r) de la structure de sillons (15) est adapté au volume du lubrifiant qui est expulsé du métal fritté pendant le fonctionnement du palier.

3. Palier lisse fritté selon la revendication 1 ou 2,
**caractérisé en ce que**
les sillons longitudinaux (16r) des structures de sillons (15) sont réalisés sous la forme de sillons capillaires, la largeur des sillons longitudinaux (16r) étant au moins 20 fois plus petite que la hauteur d'ascension capillaire du lubrifiant dans un capillaire en verre d'un diamètre de 1 mm.

4. Palier lisse fritté selon la revendication 1 à 3,
**caractérisé en ce que**
les sillons longitudinaux (16r) sont arrondis au fond (17) des sillons, de même que les crêtes de sillons (16k), avec un rayon d'arrondi, par exemple de 0,05 à 0,30 mm, qui est au moins deux fois plus petit que la largeur (par exemple 0, 30 à 0, 80 mm) des sillons longitudinaux (16r).

5. Palier lisse fritté selon une des revendications 1 à 4,
**caractérisé en ce que**
les crêtes de sillons (16k) sont en contact non porteur avec l'arbre.

6. Palier lisse fritté selon une des revendications 1 à 5,
**caractérisé en ce que**
les sillons longitudinaux (16r) s'élargissent en cône vers l'arbre avec un angle d'ouverture inférieur à 12°.

7. Palier lisse fritté selon une des revendications 1 à 6,
**caractérisé en ce que**
sa solidité est améliorée par addition de fibres de C à fibres courtes et/ou de particules de céramique et/ou d'autres particules.

8. Palier lisse fritté selon une des revendications 1 à 7,
**caractérisé en ce que**
dans les côtés frontaux (12) et/ou dans la surface extérieure (13), sont disposés des dépôts de lubrifiant additionnels à pores ouverts, en forme de sillons ou de trous borgnes, qui sont adaptés par leur angle d'ouverture, leur largeur et le rayon d'arrondi de leur fond de sillon (17) aux dimensions correspondantes des sillons longitudinaux (16r).

9. Palier lisse fritté selon la revendication 8,
**caractérisé en ce que**
les dépôts de lubrifiant sont formés dans les côtés frontaux (12) sous la forme de sillons radiaux (22).

10. Palier lisse fritté selon la revendication 8,
**caractérisé en ce que**,
dans les côtés frontaux (12), sont formés, en qualité de dépôts de lubrifiant, des anneaux de sillons concentriques et/ou des segments d'anneaux de sillons (18) qui sont mis en communication avec les surfaces de roulement (14) par l'intermédiaire de sillons radiaux (19).

11. Palier lisse fritté selon la revendication 10,
**caractérisé en ce que**
les segments d'anneaux de sillons (18) sont de longueur supérieure à 0,2 mm.

12. Palier lisse fritté selon une des revendications 1 à 11,
**caractérisé en ce que**
dans la surface extérieure (13) sont formés des sillons longitudinaux et/ou circonférentiels et/ou des segments de sillons longitudinaux et/ou circonférentiels (25) constituant des dépôts de lubrifiant.

13. Palier lisse fritté selon la revendication 12,
**caractérisé en ce que**
les sillons longitudinaux et circonférentiels et/ou les segments de sillons longitudinaux et circonférentiels (25) sont reliés entre eux au moyen de sillons de liaison s'étendant transversalement.

14. Palier lisse fritté selon une des revendications 1 à 13,
**caractérisé en ce que**
la profondeur (par exemple 0,5 mm) des sillons longitudinaux (16r), des trous borgnes (20a), des sillons radiaux (22), des anneaux de sillons et/ou des segments d'anneaux de sillons (18), et des sillons circonférentiels et/ou segments de sillons circonférentiels (25) est plus petite que la moitié de la hauteur d'ascension du lubrifiant dans un capillaire en verre d'un diamètre de 1 mm.

15. Palier lisse fritté selon une des revendications 1 à 14,
**caractérisé en ce que**
les transitions (24) menant des sillons longitudinaux (16r) aux surfaces de roulement calibrées (14) adjacentes sont arrondies, par exemple à 0,5 mm.
